# FASCICULE DE BREVET EUROPEEN

(11) **EP 0 902 597 B1**
(45) Date de publication et mention de la délivrance du brevet: **13.06.2001**
(21) Numéro de dépôt: 98402240.0
(22) Date de dépôt: 10.09.1998
(51) Int. Cl.: H04Q 7/34

(54) **Système d'observation du trafic**
System zur Verkehrsbeobachtung
Traffic observation system

(30) Priorité: 12.09.1997 FR 9711409
(43) Date de publication de la demande: 17.03.1999
(73) Titulaire: FRANCE TELECOM, 75015 Paris (FR)
(72) Inventeur: Cadaux, Nathalie, 94230 Cachan (FR)
(74) Mandataire: Ballot, Paul

(56) Documents cités:
- EP-A- 0 710 043
- EP-A- 0 738 091
- DE-A- 4 205 239
- FR-A- 2 753 596
- US-A- 4 860 281
- H LUTHI: "QVoice - die neue Generation von Diagnose-Systemen für zellulare Mobilfunk-Netze" DAS TECHNISCHE MAGAZIN VON ASCOM, no. 3, 1 mars 1995, pages 30-4, XP000557527 BERN,CH

## Description

La présente invention concerne un système d'observation du trafic d'un réseau de radiocommunication mobile tel que le système GSM (Global System for Mobile).

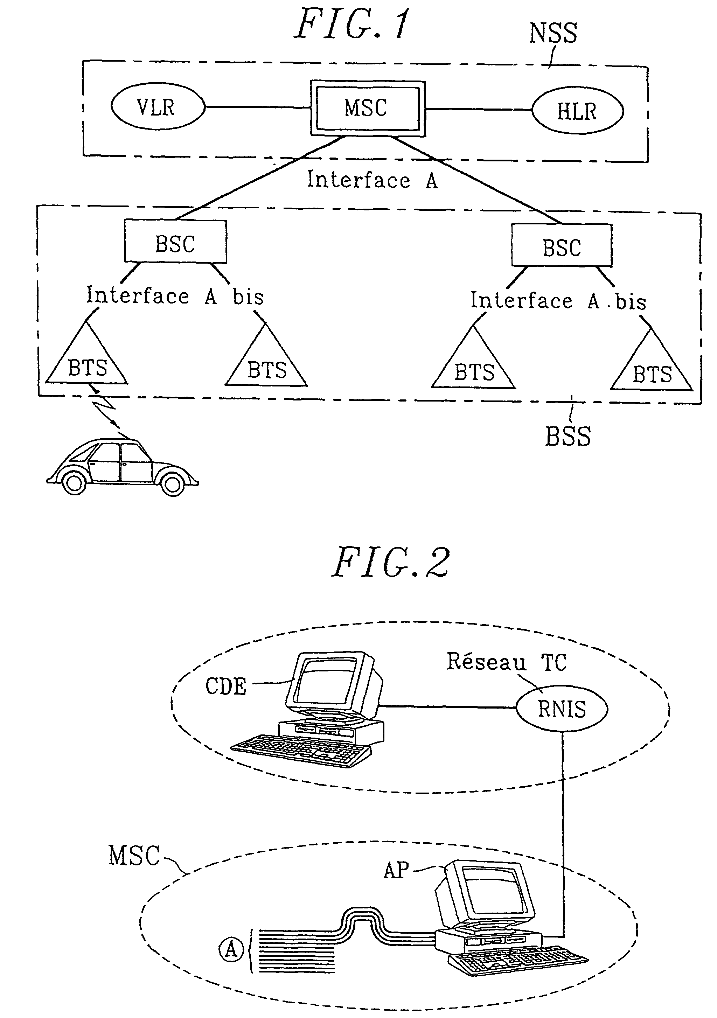

On rappelle pour mieux comprendre la suite qu'un tel réseau regroupe essentiellement deux sous-systèmes représentés sur le schéma de la figure 1 :
- le sous-système radio B.S.S. (Base Station Subsystem),
- le sous-système de commutations et de routage N.S.S. (Network and Switching Subsystem).

Le sous-système B.S.S. assure la distribution du réseau de radiocommunication. Il est constitué par des stations de base (B.T.S. Base Transceiver Station) gérées par un contrôleur de stations de base (B.S.C. Base Station Controller).

Une station de base B.T.S. est l'élément assurant l'interface entre le réseau terrestre et les mobiles.

Elle a pour tâche d'échanger les canaux de signalisation, de parole et de données entre le mobile et le réseau G.S.M.

La situation de chaque B.T.S. est définie par l'exigence de couverture radio d'une zone précise.

Dans des zones à faible densité les stations de base B.T.S. couvrent un rayon d'émission et de réception important, tandis qu'en zone à forte densité les stations de base B.T.S. sont plus nombreuses et couvrent des zones plus petites.

Un contrôleur B.S.C. gère les stations de base B.T.S. qui lui sont rattachées. Il réalise les procédures d'établissement d'appels radio et de relâche, ainsi que les procédures de maintien de communications (contrôle de puissance, handover).

Le contrôleur B.S.C. fournit en outre une fonction de concentration des liaisons de transmission qui sont des liaisons M.I.C. (Modulation par Impulsion et Codage) en permettant de concentrer les canaux de trafic issus des stations de base sur un nombre restreint de canaux vers son commutateur de rattachement (M.S.C.).

Les contrôleurs B.S.C. sont placés de manière à réduire leur nombre et la distance des liaisons M.I.C. à utiliser.

Le' sous-système N.S.S. est constitué d'un centre de commutations (M.S.C. Mobile Services Switching Center) ainsi que d'enregistreurs de localisations nominaux (H.L.R.) et temporaires (V.L.R.).

Le centre de commutation mobile M.S.C. assure le transport des communications entre les abonnés fixes et mobiles. C'est un commutateur numérique capable d'effectuer toutes les fonctions nécessaires à la gestion des appels des abonnés mobiles localisés dans son aire.

De plus, il gère les conséquences de la mobilité des abonnés. Pour ce faire, il utilise les enregistreurs de localisation des visiteurs (V.L.R. Visited Location Register) et des nominaux (H.L.R. Home Location Register). Chaque centre de commutation mobile M.S.C. possède un enregistreur V.L.R. associé.

L'implantation du centre de commutation mobile M.S.C./V.L.R. se fait de manière à réduire sa distance par rapport au sous-système B.S.S.

Un enregistreur de localisation nominal H.L.R. est une base de données capable d'assurer la gestion des abonnés mobiles. Elle contient l'identité du mobile ainsi que les données qui sont évidemment continûment variables. Le H.L.R. indique un enregistreur de localisation des visiteurs (V.L.R.).

L'enregistreur de localisations temporaires V.L.R. stocke localement les données nécessaires aux appels entrants et sortants des abonnés mobiles qui sont enregistrés dans sa base de données. Les abonnés mobiles sont ceux qui se trouvent dans les zones de localisations gérées par le V.L.R.

L'interface radio assure la communication entre le mobile et la station de base B.T.S. pour la transmission de signaux numériques. Elle s'appuie sur le protocole LAPDm.

L'interface A Bis est architecturée de manière à transporter le trafic des usagers (phonie et donnée) ainsi que la signalisation entre le B.S.C. et la B.T.S.

De ce fait, elle peut être décomposée en deux parties distinctes, l'une correspondant au transport du trafic des usagers, l'autre au transport de la signalisation liée à l'établissement des communications et à l'exploitation et maintenance de la station de base.

L'accès physique entre la B.T.S. et le B.S.C. se fait par des liaisons numériques M.I.C. de 2048 Kbit/s architecturées en 32 intervalles de temps de 64 Kbit/s. Chaque intervalle de temps correspond à un canal de trafic utilisé sur l'interface radio.

L'interface A assure le transport du trafic des usagers (phonie et données) et la signalisation entre les sous-systèmes B.S.S. et N.S.S.

Le transport du trafic des usagers nécessite l'allocation des ressources terrestres entre le B.S.S. et le N.S.S. Ces ressources terrestres sont des circuits identifiés par un numéro d'intervalle de temps et un numéro de liaison M.I.C.

L'accès physique entre le B.S.S. et le N.S.S. se fait par liaisons numériques M.I.C. de 2048 Kbit/s architecturées en 32 intervalles de temps.

Lors d'un établissement d'appel, la station mobile pratique un premier accès sur le canal de la cellule. En réponse à cela le B.S.C. alloue à la station un premier canal dédié. Après la prise par la station mobile de ce canal radio, un chemin existe entre celle-ci et le B.S.C. La station mobile utilise alors ce chemin pour envoyer un message initial.

A la réception du message initial, le B.S.C. établit avec le M.S.C. sur l'interface A une connexion dédiée à cette station mobile. Ces deux éléments, l'un sur l'interface radio l'autre sur l'interface A constituent un chemin dédié de la station mobile M.S.C. Le dialogue peut alors d'effectuer.

Selon un ancien système d'observation destiné à réaliser des observations locales, l'équipement se compose, comme cela est représenté sur la figure 2 :
- d'un ordinateur supporté par une liaison du réseau à intégration de service R.N.I.S. servant de télécommande à distance, et d'un analyseur de protocoles permettant d'observer le trafic du réseau.

Cependant, ce système nécessite de connecter à l'aide de grippe fils les quatre sorties de l'analyseur aux quatre M.I.C. à observer. Or, l'observation d'une liaison MIC nécessite de connecter cinq fils : 2 pour l'émission, 2 pour la réception et 1 pour la masse.

Une interface physique A comporte plusieurs liaisons MIC (N liaisons, ce nombre n'étant pas toujours le même selon les interfaces). Un analyseur AP possède un nombre fixe de voies MIC à tester, ce nombre est de 4. Il est par conséquent nécessaire de réaliser au préalable 4x5=20 connexions manuelles.

Un premier désavantage de ce système est qu'une connexion générait parfois des perturbations sur les M.I.C correspondants entraînant des coupures de communications.

Un deuxième désavantage de ce système est qu'il exige une connexion manuelle à mettre en oeuvre sur place sur le site, en pratique 20 connexions pour quatre MIC à tester.

En outre, cette mise en oeuvre impose un déplacement dans le centre de commutations (M.S.C.) situé en général à des dizaines de kilomètres du lieu d'observation, c'est-à-dire du lieu où se situe l'équipement de pilotage de l'observation du trafic.

On pourra se reporter également à l'état de la technique constitué par le document FR-A-2 753 596, déposé le 17.09.96 et publié le 20.03.98, postérieurement à la date de priorité de la présente demande, et par le document EP-A-0 738 091.

La présente invention permet de remédier à ces problèmes et propose pour cela de connecter entre l'analyseur et les liaisons MIC une interface de commutation automatique pour aiguiller une sortie de l'analyseur vers l'une quelconque des liaisons MIC à observer.

En outre l'interface est télécommandable à distance grâce à une liaison RNIS reliant une unité de commande à l'analyseur de protocole. Grâce à cette liaison l'analyseur de protocoles est comme transféré sur le lieu de la commande. Les paramètres de commande sont transmis par l'analyseur au boîtier de commutation et le boîtier assure la commutation entre ses différentes sorties et les voies MIC à observer suivant les instructions qu'il a reçues de l'analyseur.

La présente invention a plus particulièrement pour objet un système d'observation du trafic d'un réseau de radiocommunication mobile, ledit réseau comprenant par site, un centre de commutation relié à des contrôleurs de station de base par N liaisons de transmission numérique (MIC) ou un contrôleur de station de base relié à des stations de base par N liaisons de transmission numérique (MIC), ledit système comprenant au moins un analyseur de protocole comportant n sorties, principalement en ce qu'il comporte en outre des moyens de commutation à n entrées et N sorties, apte à aiguiller les signaux de chaque entrée sur une des sorties, les n entrées correspondant aux n sorties de l'analyseur et les N sorties étant reliées aux N liaisons MIC à observer.

Selon une autre caractéristique le système comporte un organe de pilotage de l'analyseur de protocoles relié à l'analyseur par une ligne de transmission numérique pour commander à distance le déroulement de l'analyse du réseau et le pilotage des moyens de commutation.

Avantageusement, la ligne est une ligne du réseau à intégration de service (RNIS).

Selon une autre caractéristique, les moyens de commutation comportent un ensemble de commutation formé de bascules bistables et des relais et une unité de commande apte à actionner les relais de commutation.

Selon une autre caractéristique, les moyens de commutation peuvent être mis en fonction ou désactivés sans interruption des communications téléphoniques.

Un autre objet de la présente invention concerne un dispositif de commutation pour système d'observation du trafic comportant au moins un analyseur de protocole (AP) à n sorties et destiné à analyser N liaisons de transmission numériques (MIC), ledit dispositif comprenant pour cela au moins n entrées susceptibles d'être connectées aux n sorties d'un analyseur et au moins N sorties susceptibles d'être connectées à N liaisons de transmission numériques (MIC), et étant apte à aiguiller chaque entrée sur une des sorties.

Selon une autre caractéristique, le dispositif de commutation comporte un ensemble de commutation comprenant un ensemble de bascules bistables par sortie de l'analyseur des relais de manière à ce qu'un relais soit placé à chaque sortie de chaque bascule et une unité de commande apte à actionner les relais de commutation.

Le dispositif de commutation est connectable au système d'observation du trafic sans interruption des communications téléphoniques.

Selon une autre caractéristique, le dispositif de commutation se présente sous la forme d'un boîtier indépendant de l'analyseur de protocole connectable aux sorties de l'analyseur et aux liaisons MIC à observer.

D'autres avantages et particularités de l'invention apparaîtront à la lecture de la description qui est faite ci-après et qui est donnée à titre d'exemple non limitatif en regard des dessins sur lesquels :
- la figure 1, représente l'architecture d'un système de radiotéléphonie mobile,
- la figure 2, représente le schéma d'un système d'observation selon l'état antérieur de la technique,
- la figure 3, représente un schéma général de l'invention,
- la figure 4, représente un schéma illustrant l'analyse de la signalisation entre deux points du réseau,
- la figure 5, représente un schéma plus détaillé du boîtier,
- la figure 6, représente un schéma fonctionnel de l'ensemble commutation.

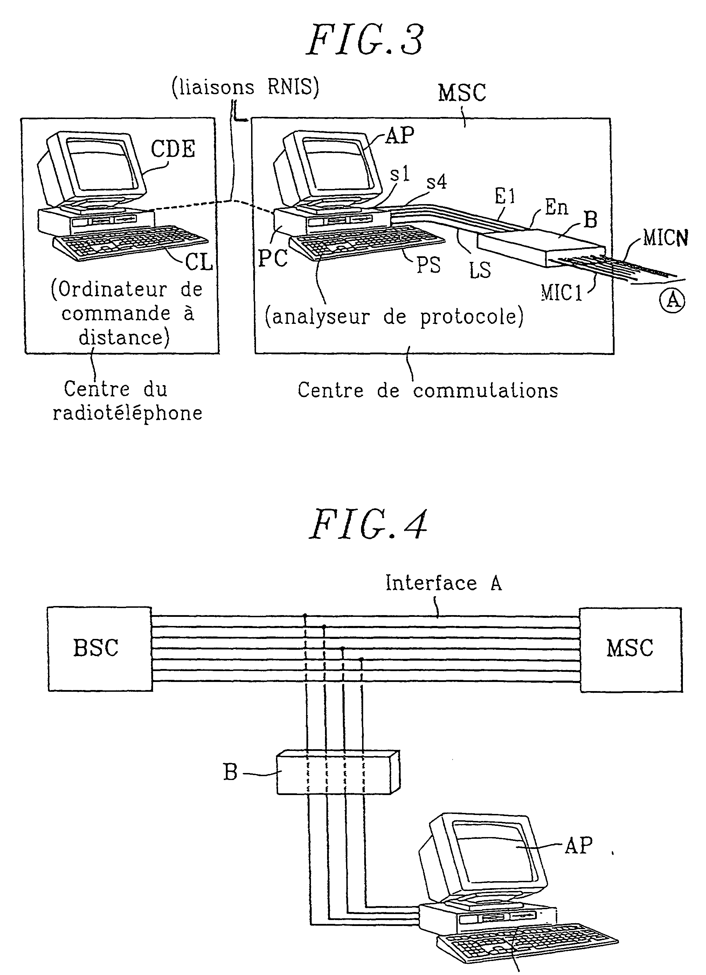

Le système proposé et schématisé sur la figure 3 consiste à connecter un analyseur de protocoles AP (ou testeur) dans chaque site du réseau .

Dans le cas de la norme GSM, un site peut être monosectoriel, c'est-à-dire que chaque cellule est couverte par une station de base, ou trisectoriel ce qui signifie qu'une station de base couvre trois cellules.

Les moyens de commutation peuvent être réalisés par un dispositif se présentant sous forme d'une carte électronique interne à l'analyseur de protocole lequel comporte alors le nombre de sorties correspondant aux nombres de voies MIC à analyser.

Ces moyens peuvent être réalisés sous forme d'un logiciel chargé dans l'analyseur équipé du nombre de sorties adéquat.

Avantageusement, les moyens de commutation sont réalisés par un boîtier indépendant de l'analyseur de protocole connectable aux sorties de l'analyseur et aux liaisons MIC à observer.

Dans tous les cas la mise en place ou la désactivation des moyens de commutation ne nécessite pas l'interruption du trafic des communications téléphoniques.

Ce boîtier de commutation est utilisable sur l'interface A ou A-Bis. Sur l'interface A il sera inséré entre le centre de commutation mobile M.S.C et le contrôleur de station de base B.S.C. Sur l'interface A-Bis il sera inséré entre le contrôleur de station de base B.S.C et la station de base B.T.S.

D'autre part, l'unité de pilotage CDE de l'analyseur AP pourra être placée dans un centre de radiotéléphone et sera reliée à l'analyseur AP par une liaison de transmission L du réseau téléphonique commuté. Cette liaison L pourra par exemple être une liaison de transmission numérique du réseau à intégration de service RNIS.

Les n sorties sl-sn de l'analyseur AP (en pratique n = 4 avec le matériel existant) sont reliées aux liaisons MIC à travers le boîtier B. En outre, un port série PS de l'analyseur AP est relié par une liaison série LS ou boîtier B pour assurer le transfert des paramètres de configuration entre l'analyseur AP et le boîtier B.

Dans l'exemple pratique qui va être décrit, l'analyseur AP utilisé est l'analyseur de protocoles K1103 de SIEMENS à 4 sorties s1, s2, s3, s4 (n=4).

Il s'agit d'un analyseur passif pour le décodage et l'analyse du protocole de télécommunications CCIT N°7 utilisé pour la signalisation.

Il se compose des éléments (non détaillés) suivants : - une unité centrale type P.C. associée à :
- une carte d'acquisition cadencée à 20 MHz permettant de relier l'analyseur au module d'interface et à,
- un module d'interface permettant l'observation de la signalisation acheminée sur une liaison M.I.C.

L'unité de commande CDE assure la fonction de télécommande pour le boîtier à travers l'analyseur AP et pour ledit analyseur. Elle est composée d'une unité centrale type P.C. reliée à un boîtier de connexion au réseau RNIS (non représenté) et chargée d'un programme de pilotage à distance de l'analyseur.

Ce programme permet de lancer la communication avec l'analyseur à la demande d'un utilisateur. Une fois la communication établie, l'utilisateur peut alors rentrer des paramètres de configuration du boîtier de commutation sur l'unité CDE tout comme s'il le faisait directement sur l'analyseur. L'écran de l'analyseur AP se reflète sur l'unité de commande.

Ces paramètres correspondent au choix portant sur les aiguillages désirés entre les entrées E1-En et les sorties S1-SN du boîtier B.

Le programme de contrôle à distance exécuté par l'unité de commande CDE est apte à permettre le contrôle de l'application exécutée par l'analyseur de protocole AP et ceci au moyen de la frappe de touches du clavier CL et les clics de la souris de cette unité de commande CDE et au moyen de l'affichage sur son écran des images qui se trouvent sur l'écran distant (écran de l'analyseur).

L'interface A, tout comme l'interface A-Bis selon la norme GSM, comporte un nombre N variable de liaisons MIC. L'observation d'un MIC nécessite de connecter 2 fils pour l'émission, 2 fils pour la réception et 1 fil de masse.

Dans l'exemple de réalisation pratique donné, le boîtier a été choisi de manière à avoir n=4 entrées correspondant aux 4 sorties de l'analyseur et N=24 sorties correspondant aux 24 liaisons MIC de l'interface A.

Un autre avantage de la présente invention est qu'il devient tout à fait possible de connecter deux analyseurs de protocoles ou plus sur l'interface A ou A-Bis, il faudra dans ce cas prévoir pour le boîtier un nombre d'entrées égal à n fois le nombre d'analyseur.

En outre ce boîtier de commutation est transparent vis à vis de l'analyseur. Il permet simplement un aiguillage des ports de l'analyseur.

Dans l'exemple donné le boîtier permet l'aiguillage de chaque entrée E1-E4 sur une des sorties S1-S24, une sortie ne pouvant pas être reliée à deux entrées différentes.

Afin de ne pas perturber la liaison MIC de 120 ohm sur laquelle le boîtier est connecté en parallèle, l'impédance de ce dernier est infinie.

Les protocoles GSM décodables par l'analyseur K1103 sont basés sur un mécanisme d'empilage de protocoles. Certains protocoles diffèrent suivant l'interface (A ou A bis) que l'on veut observer. L'interface A assure principalement la gestion du réseau tandis que l'interface A-Bis concerne celle du mobile.

L'analyseur de protocole AP permet notamment de surveiller et d'analyser des erreurs de signalisation du réseau téléphonique numérique GSM sur l'interface A et A-Bis. Il analyse la signalisation dans les deux sens de la transmission qui est composée d'une paire émission et d'une paire réception.

L'analyseur de protocole AP permet l'observation de quatre liaisons MIC au maximum entre deux points du réseau, par exemple entre le contrôleur de station de base B.S.C. et le centre de commutation M.S.C.

La figure 4 illustre cette application. Le débit des signaux bipolaires observés est de 2048 Kbit/s. Ces signaux d'une amplitude de 6 volts crête à crête correspondant à un codage de type HDB3.

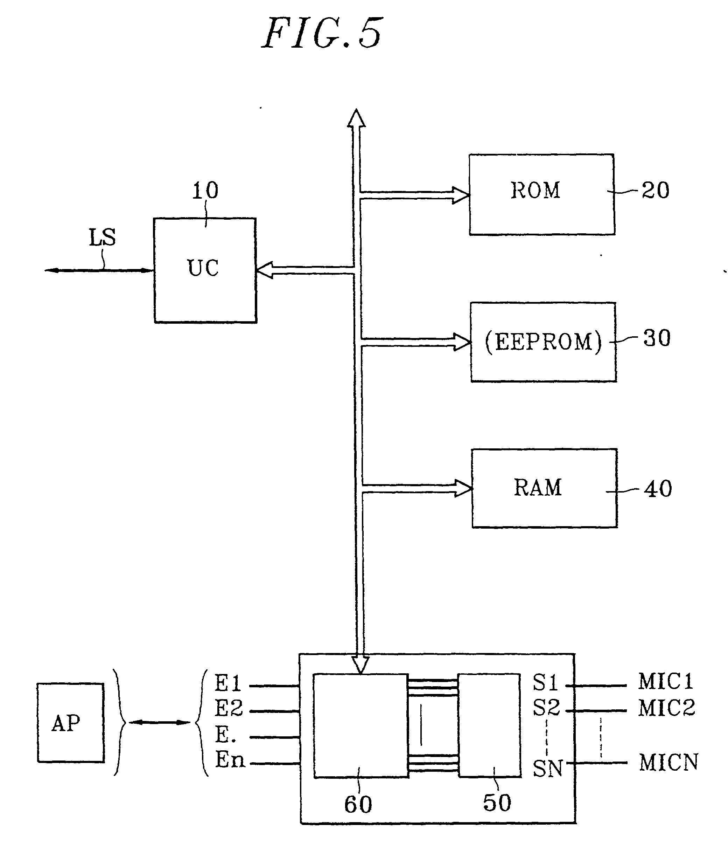

On va maintenant décrire de façon plus détaillée la réalisation du boîtier de commutation en relation avec le schéma de la figure 5.

Ce boîtier comporte une unité de commande 10 qui est réalisée selon l'exemple d'application donné par un microcontrôleur tel que le microcontrôleur référencé MC68HC11 utilisant la technologie HCMOS, et qui a pour avantage de combiner une petite taille avec un bus rapide 2MHz et une faible puissance de consommation.

La puce mémoire comprend 8 koctets de mémoire non volatile. C'est la mémoire de programme 20 (ROM) du microcontrôleur et elle contient un programme capable d'activer les bascules qui conviennent (comme détaillé dans la suite) en fonction des paramètres de configuration reçus par le microcontrôleur. Cette puce mémoire comporte en outre 512 octets de mémoire de programme électriquement programmable et électriquement effaçable 30 (EEPROM) pour permettre des mise à jour du programme de la ROM et 256 octets de mémoire de travail 40.

Le boîtier comporte en outre un ensemble de commutation comprenant des commutateurs à relais 50 et des bascules bistables 60.

L'utilisation de la commutation mécanique est rendue possible par la fréquence des signaux à observer et du temps que l'on dispose pour effectuer l'aiguillage. En effet, l'analyse de la signalisation est déclenchée à distance après le déclenchement et l'exécution du programme de configuration du boîtier B.

Chacune des n entrées du boîtier B est apte à être commutée sur une des N sorties, et pour cela nxN relais sont utilisés, soit 4x24 dans l'exemple d'implémentation donné précédemment.

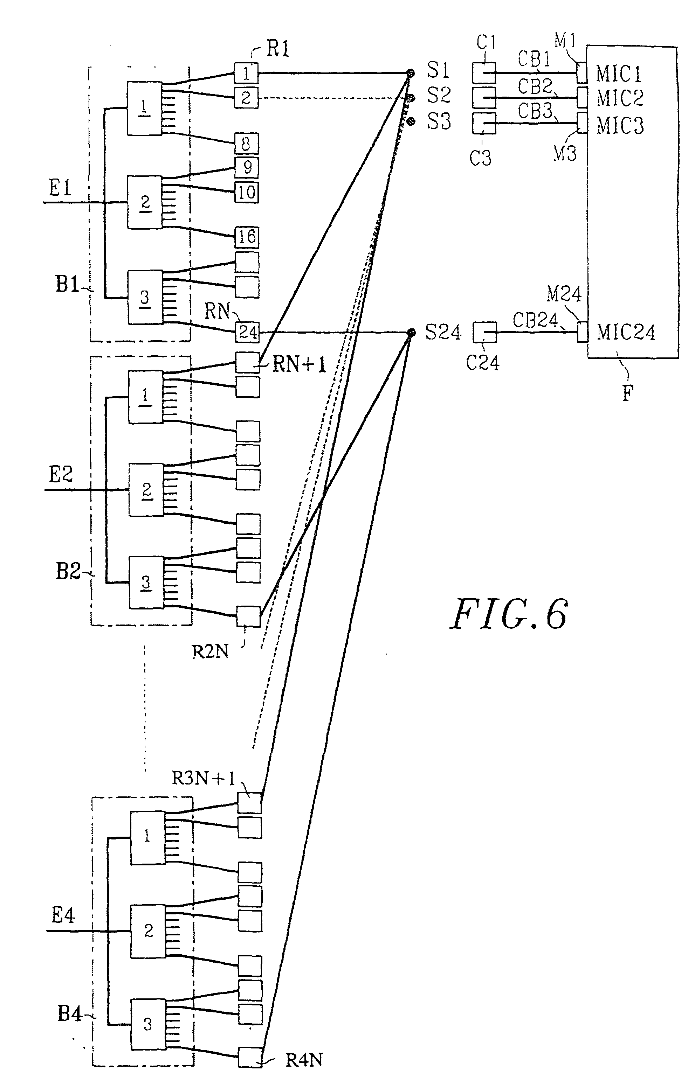

Le schéma de la figure 6 illustre l'implémentation fonctionnelle de l'ensemble de commutation 50 et 60. Toujours selon cet exemple, la commande des relais est contrôlée par n=4 ensembles de bascules B1-B4 soit en pratique 12 bascules de 8 bits (3 bascules 1, 2, 3 pour chaque entrée El ou E2...ou E4). Une horloge série d'un méga Hertz synchronise l'entrée des données sur le front montant dans les bascules.

Chaque entrée E1-E4 utilise 3 bascules, soit 24 bits nécessaires pour coder chacune des 24 sorties S1 à S24.

Pour connecter une entrée E1 au M.I.C. numéro 8, on envoie un mot de 24 bits correspondant à :

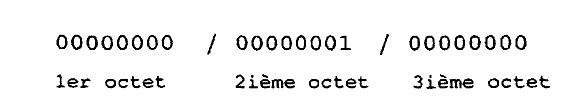

Avant tout paramétrage les relais sont tels qu'aucune entrée et sortie n'est connectée.

Le programme pilotage implanté sur l'analyseur AP demande à l'utilisateur le numéro du M.I.C. qu'il veut observer sur chacune des quatre entrées E1-E4 . Le programme transforme le numéro reçu sous la forme de 3 chiffres (3 octets) qu'il envoie l'un après l'autre sur la liaison série LS. La transmission est sécurisée. A cette fin, dès que le premier octet est reçu par le micro-contrôleur 10 du boîtier B, ce dernier le renvoie à l'analyseur AP. Une fois les 3 octets envoyés et reçus, l'analyseur AP compare la somme des octets envoyés à la somme des octets reçus. Si ces sommes sont différentes, le programme de pilotage du boîtier redemande à l'utilisateur le numéro du M.I.C.

Une fois les 12 octets envoyés correctement sur la liaison série (type RS232), les relais correspondants R1 à RN, ou RN + 1 à R2N, ou...R3N + 1 à R4N commutent. Les connexions désirées entre les entrées et les sorties sont établies. L'utilisateur peut alors configurer l'analyseur de protocoles et observer le trafic du réseau.

Si le programme implanté sur l'analyseur ne répond plus, le boîtier de commutation effectue un reset automatiquement au bout de 2 minutes. Le boîtier ne connectera pas de sorties aux entrées.

Les relais utilisés sont des relais bistables à contacts inverseurs composés de deux bobines installées sur un circuit magnétique (électro-aimant) et de plusieurs contacts inverseurs (à ouverture et à fermeture possédant un point commun).

Cet ensemble permet d'obtenir une commutation instantanée dès la prise de ligne ce qui rend le système d'observation encore plus transparent vis à vis de l'application par rapport au système de l'état de la technique.

En outre il a été prévu d'ajouter à cette transparence une grande facilité d'installation puisque les cinq fils de chaque liaison MIC sont rassemblés sur un montage fixe F ( du type réglette de connexion sur laquelle arrivent les fils issus du répartiteur émission et du répartiteur réception ).

Des cordons de raccordement CB1-CB24 sont prévus pour contenir chacun les fils d'une liaison MIC. Ces cordons sont en outre équipés de connecteurs M1-M24 à un bout destinés à êtres raccordés au montage fixe F et à l'autre bout de connecteurs C1-C24 pouvant êtres connectés indifféremment aux sorties S1-S24 du boîtier de commutation B ou aux sorties de l'analyseur AP.

Ainsi il sera très aisé, pour des cas où le boîtier n'est pas utile de le retirer simplement en déconnectant les connecteurs C1-C24.

## Revendications

1. Système d'observation du trafic d'un réseau de radiocommunication mobile, ledit réseau comprenant sur un site un centre de commutation (M.S.C.) relié à des contrôleurs de station de base (B.S.C) par N liaisons de transmission numérique (MIC) ou un contrôleur de stations de base (B.S.C) relié à des stations de base (B.T.S) par N liaisons de transmission numérique, ledit système comprenant au moins un analyseur de protocoles (AP) comportant n sorties, caractérisé en ce qu'il comporte en outre des moyens de commutation (B) à n entrées et N sorties, apte à aiguiller les signaux de chaque entrée (El, En) sur une des sorties (S1, SN), les n entrées correspondant aux n sorties de l'analyseur et les N sorties étant reliées aux N liaisons MIC à observer.

2. Système d'observation du trafic d'un réseau de radiocommunication selon la revendication 1, caractérisé en ce qu'il comporte un organe de pilotage (CDE) de l'analyseur de protocoles (AP) relié à l'analyseur par une ligne de transmission numérique (L) pour commander à distance le déroulement de l'analyse du réseau et le pilotage des moyens de commutation (B).

3. système d'observation du trafic d'un réseau de radiocommunication selon la revendication 2, caractérisé en ce que la ligne (L) est une ligne du réseau à intégration de service (RNIS).

4. Système d'observation du trafic d'un réseau de radiocommunication selon l'une quelconque des revendications précédentes, caractérisé en ce que les moyens de commutation comportent un ensemble de commutation (50, 60) formé de bascules bistables (B1-Bn) et des relais (R1-R_{nN}) et une unité de commande (10) apte à actionner les relais de commutation.

5. Système d'observation du trafic, selon l'une quelconque des revendications 1 à 4, caractérisé en ce que les moyens de commutation peuvent être mis en fonction ou désactivés sans interruption des communications téléphoniques.

6. Dispositif de commutation pour système d'observation du trafic comportant au moins un analyseur de protocole (AP) à n sorties et destiné à analyser N liaisons de transmission numériques (MIC), ledit dispositif comprenant pour cela au moins n entrées susceptibles d'être connectées aux n sorties d'un analyseur et au moins N sorties susceptibles d'être connectées à N liaisons de transmission numériques (MIC), et étant apte à aiguiller chaque entrée (El, En) sur une des sorties (S1, ..SN).

7. Dispositif de commutation selon la revendication 6, caractérisé en ce qu'il comporte un ensemble de commutation (50-60) comprenant un ensemble (B1-Bn) de bascules bistables par sortie de l'analyseur et des relais (R1 à RnN) de manière à ce qu'un relais soit placé à chaque sortie de chaque bascule et une unité de commande (10) apte à actionner les relais de commutation.

8. Dispositif de commutation selon la revendication 6 ou 7, caractérisé en ce qu'il est connectable au système d'observation du trafic sans interruption des communications téléphoniques.

9. Dispositif de commutation selon l'une quelconque des revendications 6 à 8, caractérisé en ce qu'il se présente sous la forme d'un boîtier indépendant de l'analyseur de protocole connectable aux sorties de l'analyseur et aux liaisons MIC à observer.

## Patentansprüche

1. System zur Beobachtung des Verkehrs eines Mobilfunk-Kommunikationsnetzes, wobei besagtes Netz an einem Standort ein Kommunikationszentrum (M.S.C.) umfasst, das durch N digitale Übertragungsverbindungen (MIC) mit Basisstations-Kontrolleinrichtungen (B.S.C) verbunden ist, oder eine Basisstations-Kontrolleinrichtung (B.S.C), die durch N digitale Übertragungsverbindungen mit Basisstationen (B.T.S) verbunden ist, wobei das genannte System wenigstens einen Protokollanalysator (AP) mit n Ausgängen umfasst,
**dadurch gekennzeichnet,**
dass es außerdem Schalteinrichtungen (B) mit n Eingängen und N Ausgängen umfasst, die die Signale jedes Eingangs (E1, En) an einen der Ausgänge (S1, SN) leiten, wobei die n Eingänge den n Ausgängen des Analysators entsprechen und die N Ausgänge mit den N zu beobachtenden MIC-Verbindungen verbunden sind.

2. System zur Beobachtung des Verkehrs eines Funkkommunikationsnetzes nach Anspruch 1, dadurch gekennzeichnet, dass es ein Steuerorgan (CDE) des Protokollanalysators (AP) umfasst, das durch eine digitale Übertragungsleitung bzw. einen digitalen Übertragungskanal (L) mit einem Analysator verbunden ist, um den Ablauf der Analyse des Netzes und die Steuerung der Schalteinrichtungen (B) fernzusteuem.

3. System zur Beobachtung des Verkehrs eines Funkkommunikationsnetzes nach Anspruch 2, dadurch gekennzeichnet, dass die Leitung bzw. der Kanal (L) eine Leitung bzw. ein Kanal des Diensteintegrationsnetzes (RNIS) ist.

4. System zur Beobachtung des Verkehrs eines Funkkommunikationsnetzes nach einem der vorangehenden Ansprüche, dadurch gekennzeichnet, dass Schalteinrichtungen eine Schalteinheit (50, 60) umfassen, gebildet durch bistabile Kippschaltungen (B1-Bn) und Relais (R1-R_{nN}), und eine Steuereinheit (10) zur Betätigung der Schaltrelais.

5. System zur Beobachtung des Verkehrs eines Funkkommunikationsnetzes nach einem der Ansprüche 1 bis 4, dadurch gekennzeichnet, dass die Schalteinrichtungen ohne Unterbrechung der Telefonverbindungen aktiviert oder deaktiviert werden können.

6. Schaltvorrichtung für ein Verkehrsbeobachtungssystem, wenigstens einen Protokollanalysator (AP) mit n Ausgängen umfassend, dazu bestimmt, N digitale Übertragungsverbindungen (MIC) zu analysieren, wobei die genannte Vorrichtung dazu wenigstens n Eingänge aufweist, die mit den n Ausgängen eines Analysators verbunden werden können, und wenigstens N Ausgänge, die mit N digitalen Übertragungsverbindungen (MIC) verbunden werden können, und fähig, jeden Eingang (E1, En) an einen der Ausgänge (S1, ..SN) zu leiten.

7. Schaltvorrichtung nach Anspruch 6, dadurch gekennzeichnet, dass sie eine Schalteinheit (50-60) mit pro Analysatorausgang einem Satz bistabiler Kippschaltungen (B1-Bn) und Relais (R1 bis RnN) umfasst, sodass sich an jedem Ausgang jeder Kippschaltung ein Relais befindet und eine Steuereinheit (10) zur Betätigung der Schaltrelais.

8. Schaltvorrichtung nach Anspruch 6 oder 7, dadurch gekennzeichnet, dass sie ohne Unterbrechung der Telefonverbindungen an das Verkehrsbeobachtungssystem angeschlossen werden kann.

9. Schaltvorrichtung nach einem der Ansprüche 6 bis 8, dadurch gekennzeichnet, dass sie durch ein von dem Protokollanalysator unabhängiges Gehäuse gebildet wird und an die Ausgänge des Analysators und die zu beobachtenden MIC-Verbindungen angeschlossen werden kann.

## Claims

1. System for observing the traffic of a mobile radio communications network, said network comprising on a site a switching centre (M.S.C.) linked to base station controllers (B.S.C.) by N digital transmission links (MIC) or a base station controller (B.S.C.) linked to base stations (B.T.S.) by N digital transmission links, said system comprising at least one protocol analyser (AP) comprising n outputs, characterised in that it additionally comprises switching means (B) with n inputs and N outputs, suitable for routing the signals from each input (E1, En) to one of the outputs (S1, SN), the n inputs corresponding to the n outputs of the analyser and the N outputs being linked to the N MIC links to be observed.

2. System for observing the traffic of a radio communications network according to claim 1, characterised in that it comprises a device (CDE) for controlling the protocol analyser (AP) linked to the analyser by a digital transmission line (L) for remote control of the process of analysis of the network and control of the switching means (B).

3. System for observing the traffic of a radio communications network according to claim 2, characterised in that the line (L) is a line of the service integration network (RNIS).

4. System for observing the traffic of a radio communications network according to any one of the preceding claims, characterised in that the switching means comprise a switching assembly (50, 60) formed of bistable circuits (B1-Bn) and relays (R1-R_{nN}) and an operating unit (10) suitable for actuating the switching relays.

5. System for observing the traffic according to any one of claims 1 to 4, characterised in that the switching means can be set in operation or deactivated without interrupting the telephone communications.

6. Switching device for a system for observing the traffic comprising at least one protocol analyser (AP) with n outputs and designed to analyse N digital transmission links (MIC), said device comprising for that at least n inputs suitable for connection to the n outputs of an analyser and at least N outputs suitable for connection to N digital transmission links (MIC), and being suitable for routing each input (E1, En) to one of the outputs (S1, ..SN).

7. Switching device according to claim 6, characterised in that it comprises a switching assembly (50-60) comprising an assembly (B1-Bn) of bistable circuits for each output of the analyser and relays (R1 to RnN) so that a relay is located at each output of each bistable circuit, and an operating unit (10) suitable for actuating the switching relays.

8. Switching device according to claim 6 or 7, characterised in that it can be connected to the system for observing the traffic without interrupting the telephone communications.

9. Switching device according to any one of claims 6 to 8, characterised in that it takes the form of a unit independent of the protocol analyser connectable to the outputs of the analyser and to the MIC links to be observed.
